# EUROPÄISCHE PATENTSCHRIFT

(11) **EP 2 962 800 B1**
(45) Veröffentlichungstag und Bekanntmachung des Hinweises auf die Patenterteilung: **09.08.2017**
(21) Anmeldenummer: 15170960.7
(22) Anmeldetag: 08.06.2015
(51) Int. Cl.: B23K 26/03, B23K 26/402, B23K 26/364, B23K 26/082, B23K 26/0622, B23K 103/00

(54) **VERFAHREN ZUR HERSTELLUNG EINER SCHWÄCHUNGSLINIE IN EIN ABDECKELEMENT DURCH MATERIALABTRAG UNTER VERWENDUNG VON GEPULSTEN LASERSTRAHLEN**
METHOD OF FORMING A LINE OF WEAKNESS IN A COVERING ELEMENT BY THE REMOVAL OF MATERIAL USING PULSED LASER BEAMS
PROCEDE DE FABRICATION D'UNE PERFORATION DE SEPARATION DANS UN ELEMENT DE REVETEMENT PAR ENLEVEMENT DE MATERIAU UTILISANT DES FAISCEAUX LASER PULSES

(30) Priorität: 10.06.2014 DE 102014108133
(43) Veröffentlichungstag der Anmeldung: 06.01.2016
(73) Patentinhaber: JENOPTIK Automatisierungstechnik GmbH, 07745 Jena (DE)
(72) Erfinder: LUTZE, Walter, 07751 Jena (DE); GRIEBEL, Martin, 07743 Jena (DE); Weißer, Jürgen, 07743 Jena (DE)
(74) Vertreter: Schaller, Renate

(56) Entgegenhaltungen:
- WO-A1-99/01317
- DE-B3-102007 013 108
- DE-B3-102013 104 138

## Beschreibung

Die Erfindung betrifft ein Verfahren zur Herstellung einer Schwächungslinie in ein Abdeckelement durch Materialabtrag mittels Laser, wie es gattungsgemäß aus der Patentschrift DE 10 2013 104 138 B3 bekannt ist.

Bei Fahrzeugen oder Verkehrsmitteln allgemein ist der Einsatz von Airbag-Systemen heutzutage Standard. Um das ästhetische Empfinden der Passagiere nicht zu stören, werden die Airbags möglichst unsichtbar hinter Teilen der Innenverkleidung der Fahrzeuge angeordnet. Die Innenverkleidung, nachfolgend Abdeckelement, besteht in der Regel aus stabilen und flächigen Formteilen aus Kunststoff oder aus Verbundwerkstoffen. Da die Airbags im Auslösungsfall durch das Abdeckelement hindurch ausgestoßen werden, müssen in dem Abdeckelement Airbagklappen vorhanden sein. Die Airbagklappen werden häufig durch speziell konstruierte Bereiche des Abdeckelementes gebildet, die entlang der Ränder der Airbagklappen eingebrachte Sollbruchstellen aufweisen, durch die ein sicheres und definiertes Aufreißen des Abdeckelementes gewährleistet wird.

Bei hochwertigen Ausführungen von Abdeckelementen wird eine stabile, formgebende Schicht oft mit Überzugmaterialien versehen, durch welche die zum Fahrgastraum gerichtete Oberfläche des Abdeckelementes eine optische und haptische Aufwertung erfährt. Diese Überzugmaterialien sind in der Regel Schaumstoff sowie flexible und dünnwandige Materialien, wie Kunststofffolien, Kunstleder, textile Gewirke, Mikrofaservliese oder natürliches Leder. Für die sichere Entfaltung des Airbags müssen auch die Überzugmaterialien im Bereich der Airbagklappen mit Sollbruchstellen versehen werden. Genau wie bei den stabilen formgebenden Schichten werden dazu Schwächungslinien eingebracht. Aus optischen Gründen erfolgt die Einbringung in der Regel von der nicht vom Fahrgastraum aus sichtbaren Rückseite des Überzugmaterials aus. Neben einer genau einstellbaren verbleibenden Reißfestigkeit der Schwächungslinie werden die höchsten Qualitätsansprüche an die Oberflächen nur dann erfüllt, wenn die Schwächungslinie auf der dem Passagier zugewandten Ansichtsseite des Überzugmaterials optisch und haptisch nicht wahrnehmbar ist.

Zur Einbringung der Schwächungslinien stehen eine Reihe von Verfahren zur Verfügung.

Ein Verfahren, bei dem mittels Lasern Schwächungen in ein aus Schichten bestehendes Abdeckelement (dort Dekorverbund) eingebracht werden, ist in der Patentschrift DE 10 2006 054 592 B3 offenbart. Ein Dekorverbund besteht üblicherweise aus einem Dekormaterial auf der Sichtseite und einem Dekorträgermaterial, zwischen denen ein oder mehrere Schichten einer Polsterung angeordnet sind. Die Schwächung wird in mehreren aufeinanderfolgenden Arbeitsgängen eingebracht. In einem ersten Arbeitsgang erfolgt eine nicht durchdringende Vorschwächung des Dekorträgers, sodass in den vorgeschwächten Bereichen in wenigstens einem zweiten Arbeitsgang eine Nachschwächung, in Form von den Dekorträger durchdringenden Perforationslöchern, erfolgt. Zwischen den vorgeschwächten Bereichen oder den Perforationslöchern verbleiben ungeschwächte Stege, die in einem zweiten Arbeitsschritt mit wenigstens einem Sackloch nachgeschwächt werden. Angaben zur Ausführung der Perforationslöcher oder zur Anpassung der Perforationstiefe an Dickenschwankungen der Dekormaterialien können der vorgenannten Schrift nicht entnommen werden.

Ein weiteres Laserverfahren wird in der Veröffentlichung DE 11 2006 000 443 T5 beschrieben. Hier werden mit einem gepulsten Laserstrahl Perforationslöcher in Abdeckelemente (dort Airbag-Abdeckungen) z. B. von Instrumententafeln eingebracht. Eine Instrumententafel ist mindestens aus einer Basisschicht und einer dünneren Hautschicht (Ansichtsseite) aus Kunststoff aufgebaut. Die Perforationslöcher werden von der Seite der Basisschicht eingebracht und können sich bis in die Hautschicht erstrecken. Durch die Verwendung von Laserpulsen unterschiedlicher Pulsdauer werden tiefe Hauptvertiefungen und weniger tiefe Hilfsvertiefungen ausgebildet. Auch in dieser Schrift wird die Anpassung der Perforationstiefe an mögliche Dickenschwankungen der Schichten nicht erwähnt.

Ein Verfahren, bei dem eine Schwächungslinie durch Perforation eines Abdeckelementes (dort Verkleidungsteil) mit einer Dekorschicht aus Leder mittels eines gepulsten Lasers hergestellt wird, ist in der Offenlegungsschrift WO 2005/049261 A1 offenbart. Die Perforation setzt sich aus einer Vielzahl einzelner Perforationslöcher zusammen, die entlang der Schwächungslinie durch verbleibende Stege voneinander getrennt angeordnet sind.

Wie auch bei den im Stand der Technik der vorgenannten WO 2005/049261 A1 gewürdigten Schriften erfolgt die Einbringung der Schwächungslinie während einer einmalig ausgeführten Relativbewegung des Lasers gegenüber dem Überzugmaterial, wobei nacheinander ein Perforationsloch nach dem anderen fertiggestellt wird. Durch entsprechende Anpassung der Pulsdauer und der Laserleistung im Zusammenhang mit der Geschwindigkeit der Relativbewegung wird Einfluss auf die Tiefe der Perforation genommen bzw. die verbleibende Restwandstärke des Überzugmaterials eingestellt.

Es werden außerdem Maßnahmen vorgeschlagen, durch welche die Wärmebelastung des Überzugmaterials während der Laserbearbeitung gering gehalten wird. Dazu erfolgt die Herstellung der nacheinander auf der Schwächungslinie angeordneten Perforationslöcher mit kurzen bzw. ultrakurzen Laserpulsen und mit entsprechenden Pausen zwischen den einzelnen Laserpulsen. Entsprechend dem dargelegten Verfahren muss man davon ausgehen, dass diese Pausen durch eine Absenkung der Pulsfrequenz erreicht werden, sodass sich die Energieeinträge der ansonsten mit höherer Frequenz auftreffenden Laserpulse nicht über die Zeit aufsummieren können.

Gegenüber den zuvor angeführten Verfahren lässt sich mit diesem Verfahren eine Schwächungslinie mit definierterer Reißfestigkeit und deutlich geringerer Schwankungsbreite der Reißfestigkeit herstellen. Durch die einzuhaltenden Pausen zwischen den Laserpulsen und die dazu reduzierte Pulsfrequenz des Lasers wird der Bearbeitungsprozess verlangsamt.

Ein ähnlich ablaufendes Verfahren ist in der Patentschrift DE 10 2007 013 108 B3 offenbart. Das hier zu perforierende Abdeckelement weist im Verlauf der herzustellenden Perforationslinie abwechselnd Bereiche mit hoher und mit geringer Materialdicke auf, in denen der gepulste Laser jeweils in einem ersten oder zweiten Laserregime betrieben wird, um die gewünschten Restwandstärken der Sacklöcher zu erzeugen. Die Erkennung der Materialdickenbereiche erfolgt im ersten Laserregime mittels einer definierten und gleichbleibenden Indikationspulsfolge der Laserstrahlung, die zu Beginn eines jeden Perforationslochs appliziert wird. Im Bereich der geringen Materialdicke ist die Indikationspulsfolge ausreichend um ein Sackloch bis zur Detektion transmittierender Laserstrahlung herzustellen. Im Bereich hoher Materialdicke kann mit der Indikationspulsfolge keine ausreichende Perforation erreicht werden, sodass nach Ablauf der Indikationspulsfolge zur Herstellung des Sacklochs auf das zweite Laserregime mit einer höheren Laserleistung umgeschaltet wird. Prinzipbedingt ist dieses Verfahren nicht dafür geeignet, die Dicke der Restwandstärke einzustellen.

In der vorgenannten Patentschrift DE 10 2013 104 138 B3 ist ein Verfahren zur Einbringung einer definierten Schwächungslinie in ein Überzugmaterial durch Materialabtrag beschrieben, bei dem das linienförmige Führen eines gepulsten Laserstrahls, wie es aus den vorgenannten Publikationen bekannt ist, ein mehrfaches Wiederholen einer Abtastbewegung ist, bei der entlang der Linie jeweils pro Auftreffort nur ein Laserpuls abgegeben wird. Die Parameter des Laserpulses sind dabei so gewählt, dass dieser einen Energieeintrag bewirkt, der am jeweiligen Auftreffort zu einer Erwärmung des Überzugmaterials auf eine Temperatur oberhalb einer Ablationsschwelle führt, jedoch die Temperatur in an den jeweiligen Auftreffort angrenzenden Bereichen des Überzugmaterials unterhalb einer Grenztemperatur, die zu Veränderungen in der Struktur des Überzugmaterials führen würde, gehalten wird.

Die mehrfache Wiederholung der Abtastbewegung kann bis zum Erreichen einer geringen Restwandstärke erfolgen, bei der ein Sensor die dann transmittierende Laserstrahlung detektiert. Bei Erreichen der minimal zulässigen Restwandstärke an einem einzelnen Auftreffort erfolgt während der Abtastbewegung eine ortsaufgelöste Abschaltung des Laserstrahls.

Damit pro Auftreffort nur ein Laserpuls auftrifft, sind die Geschwindigkeit der Abtastbewegung und die Pulswiederholfrequenz des gepulsten Laserstrahls aufeinander abgestimmt.

Alternativ kann der Laserstrahl während der wiederholten Abtastbewegung vorteilhaft entsprechend einem festen Regime an- und abgeschaltet werden, wobei die entlang der Linie eingebrachte Schwächungslinie die Form einer Schlitz-Steg-Linie mit einer abwechselnden Aneinanderreihung von Schlitzen und Stegen aufweist.

Indem pro Auftreffort das Erreichen einer minimalen Restwandstärke erfasst wird und eine entsprechende ortsaufgelöste Abschaltung erfolgt, kann eine Schwächungslinie hergestellt werden, die unabhängig von Materialdickenschwankungen eine über ihre Länge konstante Aufreißfestigkeit aufweist. Der Betrag des Aufreißwiderstandes kann hier folglich nicht über die verbleibende Restwandstärke beeinflusst werden und muss folglich über die Anzahl der Auftrefforte bzw. der entstehenden, das Material bis auf eine Restwand durchdringenden Perforationslöcher und deren Abstände bzw. Steglängen eingestellt werden. Perforationslöcher bzw. Schlitze mit unterschiedlichen Restwandstärken bzw. mit Restwandstärken, die noch nicht detektierbar sind, da eine gegebenenfalls transmittierende Laserstrahlung noch unterhalb des Schwellwertes des Sensors liegt, sind mit diesem Verfahren nicht herstellbar. Damit kann die Restwandstärke nur sehr begrenzt für die Einstellung einer gewünschten Reißfestigkeit bzw. des Schwächungsgrades verwendet werden, und für manche Materialien ist das Verfahren gänzlich ungeeignet, da eine minimale Restwandstärke entlang der gesamten Schwächungslinie keine dauerhafte Unsichtbarkeit garantiert.

Bei einem in der Patentschrift EP 0 991 551 B1 offenbarten Verfahren bzw. einer Airbagabdeckung wird eine Schwächungslinie durch eine Aneinanderreihung einer Vielzahl nacheinander hergestellter Perforationslöcher mittels eines gepulsten Laserstrahls erzeugt. Die Perforationslöcher können einander überlappend oder durch verbleibende Stege voneinander beabstandet eingebracht werden. Die Perforationslöcher sind fertig gestellt, sobald eine Transmission der Laserstrahlung durch das verbleibende Restmaterial erfasst wird. Neben der Perforation können auch Schwächungslinien, Abschnitte in der Schwächungslinie oder einzelne Löcher hergestellt werden, ohne das Material vollständig zu perforieren. Die Tiefe dieser nicht perforierenden Schwächung kann anhand der Pulsanzahl und / oder der Pulsdauer abgeschätzt und eingestellt werden, die zur Herstellung einer Perforation erforderlich ist. Genauere Angaben zur Einstellung der Tiefe werden in der Schrift nicht offenbart.
Der Erfindung liegt die Aufgabe zugrunde, ein Verfahren gemäß der vorgenannten DE 10 2013 104 138 B3 und EP 0 991 551 B1 so zu verbessern, dass mit ihm eine Schwächungslinie in ein Abdeckelement hergestellt werden kann, welche Schlitze mit einer frei wählbaren Restwandstärke aufweist.
Diese Aufgabe wird für ein Verfahren zur Herstellung einer Schwächungslinie durch Materialabtrag an einem Abdeckelement, aufweisend eine Ansichtsseite und eine der Ansichtsseite gegenüberliegende Rückseite, gemäß dem Anspruch 1 gelöst. Gleich dem Stand der Technik werden dabei Laserpulse mit einer Energie, bestimmt durch eine Pulsamplitude und eine Pulslänge, auf die Rückseite gerichtet und mit einer Vorschubgeschwindigkeit, mehrfach wiederholt jeweils in einem Bearbeitungszyklus, entlang einer gedachten Linie geführt. Dabei wird die Energie der Laserpulse in das Abdeckelement eingetragen. Es entsteht eine Schwächungslinie infolge eines Materialabtrags in Form wenigstens eines Schlitzes mit einer Schlitzlänge. Eine unterhalb des wenigstens einen Schlitzes bestehende und an die Ansichtsseite angrenzende Restwand weist eine Restwandstärke auf, die sich mit jedem Bearbeitungszyklus zunehmend verringert, bis sie so gering ist, dass Energieanteile der Laserpulse, welche durch die Restwand transmittieren, von einer seitens der Ansichtsseite angeordneten Sensoranordnung detektiert werden.
Es ist erfindungswesentlich, dass entlang des wenigstens einen Schlitzes punktweise entlang der gedachten Linie in wenigstens einem ersten Segment mit einer ersten Länge eine höhere Energie eingetragen wird als in wenigstens einem zweiten Segment mit einer zweiten Länge, sodass jeweils eine erste Restwandsegmentstärke eines ersten Restwandsegmentes der Restwand entlang des wenigstens einen ersten Segmentes schneller abnimmt als eine zweite Restwandsegmentstärke eines zweiten Restwandsegmentes der Restwand entlang des wenigstens einen zweiten Segmentes, wodurch jeweils die erste Restwandsegmentstärke des ersten Restwandsegmentes entlang des wenigstens einen ersten Segmentes erfasst wird, bevor die zweite Restwandsegmentstärke für das zweite Restwandsegment entlang des wenigstens einen zweiten Segmentes erfasst werden kann, und daraus Rückschlüsse auf die zweite Restwandsegmentstärke des zweiten Restwandsegments entlang des wenigstens einen zweiten Segmentes gezogen werden, ohne sie zu erfassen.

Vorteilhaft erfolgt der Energieeintrag pro Schlitz entlang der Schlitzlänge des wenigstens einen ersten Segmentes wenigstens im ersten der Bearbeitungszyklen durch wenigstens einen der Laserpulse. Dieser weist eine vergleichsweise kurze Pulslänge auf, und in weiteren der Bearbeitungszyklen entlang der Schlitzlänge des Schlitzes erfolgt der Energieeintrag durch einen der Laserpulse, der eine vergleichsweise lange Pulslänge aufweist.

Hierbei ist es von Vorteil, wenn die Pulsamplitude der Laserpulse wenigstens jeweils über einen der Bearbeitungszyklen gleich ist.

Alternativ kann der Energieeintrag pro Schlitz und pro Bearbeitungszyklus jeweils mit wenigstens einem gleichen der Laserpulse vorteilhaft erfolgen, der über seine Pulslänge amplitudenmoduliert ist, mit einer vergleichsweise größeren Pulsamplitude für den Energieeintrag entlang der Länge des wenigstens einen ersten Segmentes und einer vergleichsweise kleineren Pulsamplitude für den Energieeintrag entlang der Länge des wenigstens einen zweiten Segmentes.

Auch kann der Energieeintrag pro Schlitz und pro Bearbeitungszyklus mit einer gleichen Folge der Laserpulse vorteilhaft erfolgen, bei der wenigstens einer der Laserpulse eine vergleichsweise größere Pulsamplitude für den Energieeintrag entlang der Länge des wenigstens einen ersten Segmentes aufweist und mehrere der Laserpulse unmittelbar aufeinanderfolgen, die eine vergleichsweise kleinere Pulsamplitude für den Energieeintrag entlang der Länge des wenigstens einen zweiten Segmentes aufweisen.

Es ist auch von Vorteil, wenn der Energieeintrag pro Schlitz und pro Bearbeitungszyklus mit einer gleichen Folge der Laserpulse erfolgt, bei der wenigstens einer der Laserpulse eine vergleichsweise längere Pulslänge für den Energieeintrag entlang der Länge des wenigstens einen ersten Segmentes aufweist und mehrere der Laserpulse unmittelbar aufeinanderfolgend eine vergleichsweise kleinere Pulsamplitude für den Energieeintrag entlang der Länge des wenigstens einen zweiten Segmentes aufweisen. Die Pulsamplitude der Laserpulse mit der vergleichsweise längeren Pulslänge ist dabei nicht größer als die Pulsamplitude der Laserpulse mit der vergleichsweise kürzeren Pulslänge.

Es ist besonders vorteilhaft, wenn der Energieeintrag pro Schlitz entlang der Länge des wenigstens einen ersten Segmentes wenigstens im ersten der Bearbeitungszyklen durch wenigstens einen der Laserpulse erfolgt und entlang der Schlitzlänge des Schlitzes in weiteren der Bearbeitungszyklen der Energieeintrag mit jeweils einer gleichen Folge der Laserpulse erfolgt, wobei die Folge der Laserpulse eine größere Anzahl von Laserpulsen umfasst als Laserpulse beim Energieeintrag pro Schlitz im wenigstens ersten der Bearbeitungszyklen beteiligt sind und die Pulslänge und die Pulsamplitude aller Laserpulse wenigstens über einen der Bearbeitungszyklen konstant ist.

Im Anschluss an die Bearbeitungszyklen, die das Verfahren bestimmen, kann eine weitere Bearbeitung der zweiten Segmente erfolgen.

Nachfolgend soll die Erfindung anhand von Ausführungsbeispielen näher erläutert werden. In den dazugehörigen Zeichnungen zeigen:
- Fig. 1 a - 1 g: Leistungs-Zeit-Diagramme für die Laserpulse zur Herstellung eines Schlitzes gemäß einem ersten Ausführungsbeispiel des Verfahrens sowie eine damit hergestellte beispielhafte Schwächungslinie im Schnittbild und in Draufsicht,
- Fig. 2a - 2g: Leistungs-Zeit-Diagramme für die Laserpulse zur Herstellung eines Schlitzes gemäß einem zweiten Ausführungsbeispiel des Verfahrens sowie eine damit hergestellte beispielhafte Schwächungslinie im Schnittbild und in Draufsicht,
- Fig. 3a - 3g: Leistungs-Zeit-Diagramme für die Laserpulse zur Herstellung eines Schlitzes gemäß einem dritten Ausführungsbeispiel des Verfahrens sowie eine damit hergestellte beispielhafte Schwächungslinie im Schnittbild und in Draufsicht,
- Fig. 4a - 4g: Leistungs-Zeit-Diagramme für die Laserpulse zur Herstellung eines Schlitzes gemäß einem vierten Ausführungsbeispiel des Verfahrens sowie eine damit hergestellte beispielhafte Schwächungslinie im Schnittbild und in Draufsicht,
- Fig. 5a - 5g: Leistungs-Zeit-Diagramme für die Laserpulse zur Herstellung eines Schlitzes gemäß einem fünften Ausführungsbeispiel des Verfahrens sowie eine damit hergestellte beispielhafte Schwächungslinie im Schnittbild und in Draufsicht,
- Fig. 6a - 6g: Leistungs-Zeit-Diagramme für die Laserpulse zur Herstellung eines Schlitzes gemäß einem sechsten Ausführungsbeispiel des Verfahrens sowie eine damit hergestellte beispielhafte Schwächungslinie im Schnittbild und in Draufsicht und
- Fig. 7: eine Prinzipskizze für eine Vorrichtung zur Durchführung des Verfahrens.

Mit dem Verfahren wird in einem Abdeckelement 1 eine definierte Schwächungslinie 2 hergestellt, entlang der das Abdeckelement 1 eine definierte Reißfestigkeit aufweist und folglich mit einer definierten Reißkraft aufgerissen werden kann. Unter dem Abdeckelement 1 soll jegliches Innenverkleidungsteil eines Fahrzeuges verstanden werden, hinter dem ein Airbag platziert sein kann, egal ob einschichtig oder mehrschichtig.

Die Einbringung der Schwächungslinie 2 erfolgt durch Materialabtrag mittels eines gepulsten Laserstrahls 7. Die Schwächungslinie 2 wird auf einer im späteren Einbauzustand einem Betrachter abgewandten Rückseite 12 des Abdeckelementes 1 eingebracht, wobei sie auf einer dem Betrachter dann zugewandten Ansichtsseite 11 unsichtbar und nicht ertastbar ist.

Die Schwächungslinie 2 kann aus einem einzelnen Schlitz 21 oder einer Vielzahl von Schlitzen 21 gebildet werden, die voneinander durch jeweils einen Steg 22 getrennt sind. Erfindungswesentlich ist die Herstellung der Schlitze 21.

Grundsätzlich wird der von einem Laser 6 ausgehende gepulste Laserstrahl 7 auf die Rückseite 12 des Abdeckelementes 1 gerichtet und mit einer Vorschubgeschwindigkeit mehrfach entlang einer gedachten Linie 20, entlang der die Schwächungslinie 2 eingebracht werden soll, relativ geführt.

Um eine hohe Vorschubgeschwindigkeit zu erreichen, wird der gepulste Laserstrahl 7 bevorzugt über das ortsfest angeordnete Abdeckelement 1, bevorzugt mit einem Scanner 9 bewegt. Die Bearbeitung kann dabei stets im gleichen oder auch im wechselnden Richtungssinn erfolgen.

Den gepulsten Laserstrahl 7 bildende Laserpulse 3 treffen dabei entlang der gedachten Linie 20 auf das Abdeckelement 1 auf. Das jeweils einmalige Führen des Laserstrahles 7 entlang der gedachten Linie 20 soll nachfolgend als ein Bearbeitungszyklus Z verstanden werden, sodass das Verfahren mehrere Bearbeitungszyklen Z umfasst. Mit jedem Bearbeitungszyklus Z wird durch die Einwirkung wenigstens einer der Laserpulse 3 und damit durch Einbringung von dessen Energie in das Abdeckelement 1 Material abgetragen.

Durch Inhomogenitäten im Material des Abdeckelementes 1 kann z. B. der Materialabtrag trotz gleicher Verfahrensparameter innerhalb eines sich ausbildenden Schlitzes 21 und zwischen den Schlitzen 21 unterschiedlich schnell erfolgen. Dadurch werden mit zunehmender Anzahl der Bearbeitungszyklen Z die Schlitze 21 nicht gleichmäßig tiefer, und die Dicke, nachfolgend Restwandstärke, einer unterhalb der Schlitze 21 verbleibenden Restwand verringert sich auch bei einer konstanten Dicke des Abdeckelementes 1 und homogenem Material des Abdeckelementes 1 nicht gleich. Aus dem detektierten Energieanteil bzw. Sensorsignal kann in Kenntnis der Materialparameter die Restwandstärke bestimmt werden.

Versteht man die gedachte Linie 20 als eine Aneinanderreihung von gedachten Punkten, lässt sich der Gedanke der Erfindung so erklären, dass die Punkte der gedachten Linie 20, über die ein Schlitz 21 gebildet wird, betrachtet über die Gesamtbearbeitungszeit aller Bearbeitungszyklen Z des Verfahrens entweder mit einer vergleichsweise höheren Energie oder einer vergleichsweise geringeren Energie beaufschlagt werden. Entlang einzelner oder unmittelbar benachbarter Punkte, die mit der vergleichsweise höheren Energie beaufschlagt werden, werden erste Segmente 4 der Schlitze 21 ausgebildet. Entlang der unmittelbar benachbarten Punkte, die mit der vergleichsweise geringeren Energie beaufschlagt werden, werden zweite Segmente 5 der Schlitze 21 ausgebildet. Ein Punkt kann z. B. durch den kleinstmöglichen Querschnitt eines mit einer minimalen Pulslänge w auftreffenden Laserpulses 3 erklärt werden.

Jeder Schlitz 21 weist somit wenigstens ein erstes Segment 4 auf, das sich jeweils über einen oder mehrere Punkte der gedachten Linie 20 erstreckt, und wenigstens ein zweites Segment 5. Das bzw. die zweiten Segmente 5 umfassen alle die Punkte der gedachten Linie 20, an denen ein vergleichsweise geringerer Energieeintrag erfolgt.

Die Restwand eines Schlitzes 21 setzt sich folglich aus ersten Restwandsegmenten R₄ mit einer ersten Restwandsegmentstärke r₄ unterhalb der ersten Segmente 4 und zweiten Restwandsegmenten R₅ mit einer zweiten Restwandsegmentstärke r₅ unterhalb der zweiten Segmente 5 zusammen. Die ersten und zweiten Restwandsegmentstärken r₄, r₅ können jeweils innerhalb oder auch zwischen den Schlitzen 21 nach jedem Bearbeitungszyklus Z schwanken. Erst am Ende des Verfahrens sind die erste Restwandsegmentstärke r₄ und die zweite Restwandsegmentstärke r₅ jeweils über die Schwächungslinie 2 gleich.

Eine Schlitzlänge l des Schlitzes 21 setzt sich aus der Anzahl der ersten Segmente 4 multipliziert mit der ersten Länge l₄ eines der ersten Segmente 4 und der Anzahl der zweiten Segmente 5 multipliziert mit der zweiten Länge l₅ eines der zweiten Segmente 5 zusammen.

Grundsätzlich ist es ausreichend, wenn ein Schlitz 21 nur ein erstes Segment 4 aufweist und dieses sehr kurz, nahezu punktförmig ist.

Eine seitens der Ansichtsseite 11 des Abdeckelementes 1 entlang der gedachten Linie 20 angeordnete Sensoranordnung 8 detektiert durch die ersten Restwandsegmente R₄ transmittierende Energieanteile wenigstens eines Laserpulses 3, bevor durch die zweiten Restwandsegmente R₅ transmittierende Energieanteile detektiert werden können. Aus der Kenntnis der Position des Laserstrahles 7 zum Zeitpunkt der Abgabe des Sensorsignales kann dieses einem ersten Restwandsegment R₄ zugeordnet werden. Der Energieeintrag entlang der ersten Segmente 4 wird jeweils gestoppt, wenn die erste Restwandsegmentstärke r₄ erfasst wurde bzw. wenn sie ein vorgegebenes Abmaß erreicht hat. Das kann für verschiedene erste Segmente 4 in verschiedenen Bearbeitungszyklen Z erfolgen, da, wie bereits erläutert, entweder der Materialabtrag nicht homogen erfolgt oder unterschiedlich groß sein muss, weil z. B. das Abdeckelement 1 auf seiner Ansichtsseite 11 strukturiert ist.

Die erfasste erste Restwandsegmentstärke r₄ ist wenigstens nahezu für alle ersten Segmente 4 gleich.

In Kenntnis der Prozessparameter lässt sich aus der erfassten ersten Restwandsegmentstärke r₄ auf die zweite Restwandsegmentstärke r₅ unterhalb der jeweils angrenzenden zweiten Segmente 5 schließen. Dazu wird das gewonnene Wissen über die Wirkung des Energieeintrages genutzt. Insbesondere wenn das Abdeckelement 1 keine konstante Dicke aufweist, was z. B. durch eine strukturierte Oberfläche der Ansichtsseite 11 gegeben sein kann, oder wenn das Abdeckelement 1 inhomogene Materialschichten umfasst, kann es von Vorteil sein, wenn entlang eines Schlitzes 21 mehrere voneinander beabstandete erste Segmente 4 vorhanden sind, an denen dann die erste Restwandsegmentstärke r₄ erfasst werden kann. Die zweite Restwandsegmentstärke r₅ der zweiten Restwandsegmente R₅ kann dann genauer eingestellt werden, was insbesondere bei starken Schwankungen der zweiten Restwandsegmentstärke r₅ über den gesamten Schlitz 21, nach einer gleichen Anzahl von Bearbeitungszyklen Z, von Vorteil ist.

Die Reißfestigkeit der Schwächungslinie 2 kann so über eine an die Eigenschaften des Abdeckelementes 1 angepasste zweite Restwandsegmentstärke r₅ im Bereich der Schlitze 21 eingestellt werden. Insbesondere wenn das Abdeckelement 1 auf der Ansichtsseite 11 eine reißfeste, für die Laserpulse 3 nur wenig transparente Schicht aufweist, ist das Verfahren sehr von Vorteil.

Indem im Verhältnis zur Schlitzlänge l nur in ersten Segmenten 4 einer kurzen ersten Länge l₄ ein Materialabtrag so tief erfolgt, dass Anteile der Energie wenigstens eines Laserpulses 3 durch die verbleibenden ersten Restwandsegmente R₄ transmittieren, ist für die längeren zweiten Längen l₅ eine Entscheidungsfreiheit über einen weiteren Materialabtrag entlang der zweiten Segmente 5 gegeben.

So kann der weitere Materialabtrag gestoppt werden, die verbleibende zweite Restwandsegmentstärke r₅ bleibt dann größer als die erste Restwandsegmentstärke r₄. Es kann auch in zusätzlichen, an das Verfahren anschließenden Bearbeitungszyklen Z ein weiterer Materialabtrag entlang der zweiten Segmente 5 erfolgen, ohne oder bis dahin, dass die zweite Restwandsegmentstärke r₅ die dann konstant bleibende erste Restwandsegmentstärke r₄ erreicht.

Es könnten für die zusätzliche Bearbeitung dann auch die Prozessparameter verändert werden, sodass sich z. B. die zweite Restwandsegmentstärke r₅ langsamer an die dann konstant bleibende erste Restwandsegmentstärke r₄ annähert.

Der Vorteil des Verfahrens besteht insbesondere darin, dass sich die Aufreißfestigkeit vergleichsweise besser über eine Variation der der zweiten Restwandsegmentstärker4 beeinflussen lässt, als wenn gemäß dem Stand der Technik der Materialabtrag in Gänze solange über eine Vielzahl von Bearbeitungszyklen Z erfolgt, bis die Restwandstärke entlang der gesamten Schlitzlänge l erfasst und damit sehr gering ist, wobei die Bearbeitung örtlich gestoppt wird, wenn die Restwandstärke erfasst worden ist.

Die Ausführungsbeispiele des Verfahrens unterscheiden sich im Wesentlichen durch unterschiedliche Anzahlen von Laserpulsen 3, Laserpulsen 3 mit unterschiedlicher Pulslänge w und / oder Pulsamplitude A innerhalb einzelner Bearbeitungszyklen Z und / oder zwischen den Bearbeitungszyklen Z, die an der Bildung eines Schlitzes 21 beteiligt sind. Das Einbringen einer höheren Energie in das Abdeckelement 1 entlang der ersten Segmente 4 kann so durch verschiedene Pulsregime erfolgen.

Bevor in einem der Bearbeitungszyklen Z der gesamte Schlitz 21 mit Energie beaufschlagt wird, können in vorangestellten Bearbeitungszyklen Z nur die ersten Segmente 4 mit Energie beaufschlagt werden, was einer zeitlichen Vorbearbeitung entspricht.

Es kann auch der höhere Energieeintrag entlang der ersten Segmente 4 mittels Pulsamplituden- und / oder Pulslängenmodulation erfolgen.

Entscheidend ist, dass entlang der ersten Segmente 4 über die Bearbeitungszyklen Z mehr Energie eingebracht wird.

Insbesondere das Einbringen unterschiedlicher Energieverteilung über die Schlitzlänge l soll nachfolgend anhand verschiedener Ausführungsbeispiele für das Verfahren erläutert werden.

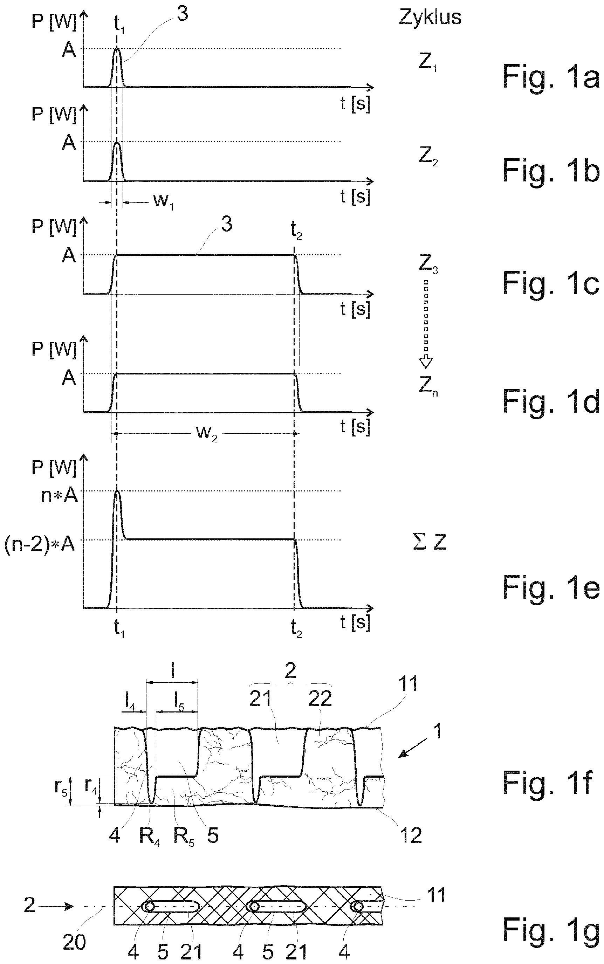

In den Fig. 1a bis 1g sind für mehrere Bearbeitungszyklen Z eines ersten Ausführungsbeispiels des Verfahrens jeweils ein Leistungs-Zeit-Diagramm (Fig. 1 a - 1 d), für die Summe aller Bearbeitungszyklen Z ein Leistungs-Zeit-Diagramm (Fig. 1 e) sowie ein Schnittbild (Fig. 1 f) und eine Draufsicht (Fig. 1 g) auf eine mit dem Verfahren gemäß dem ersten Ausführungsbeispiel hergestellte Schwächungslinie 2, bestehend aus Schlitzen 21 und Stegen 22, gezeigt. Der Einfachheit halber sind in den Leistungs-Zeit-Diagrammen nur der bzw. die Laserpulse 3 dargestellt, die an der Ausbildung eines einzigen Schlitzes 21 beteiligt sind.

In einem ersten Bearbeitungszyklus Z₁, Fig. 1a, wird bezogen auf den Beginn des ersten Bearbeitungszyklus Z₁, beginnend mit einem ersten Zeitpunkt t₁ ein erster Laserpuls 3 mit einer vergleichsweise kurzen Pulslänge w₁ auf die gedachte Linie 20 gerichtet. Innerhalb des zweiten Bearbeitungszyklus Z₂, Fig. 1b, wird bezogen auf den Beginn des zweiten Bearbeitungszyklus Z₂, beginnend mit einem gleichen ersten Zeitpunkt t₁ ein zweiter Laserpuls 3 mit einer gleichen vergleichsweise kurzen Pulslänge w₁ auf das Abdeckelement 1 gerichtet, womit sich die Energieeinträge durch den ersten und den zweiten Laserpuls 3 überlagern.

Beginnend mit dem dritten Bearbeitungszyklus Z₃ werden bis zu einem n-ten Bearbeitungszyklus Zₙ, in dem Anteile der Energie des n-ten Laserpulses 3 detektiert werden, weitere Laserpulse 3 jeweils bezogen auf den Beginn des betreffenden Bearbeitungszyklus Z, beginnend zu einem gleichen ersten Zeitpunkt t₁ auf die gedachte Linie 20 gerichtet. Die weiteren Laserpulse 3 weisen eine vergleichsweise lange Pulslänge w₂ auf, die so lang ist, dass sie bei einer vorgegebenen Vorschubgeschwindigkeit jeweils bezogen auf den jeweiligen Bearbeitungszyklusbeginn zu gleichen zweiten Zeitpunkten t₂ enden, an denen die weiteren Laserpulse 3 über die Schlitzlänge l geführt wurden.

Da die Vorschubgeschwindigkeit konstant ist, treffen die Laserpulse 3 zu gleichen jeweils auf den Beginn eines Bearbeitungszyklus Z bezogenen Zeitpunkten auf gleiche Steckenelemente entlang der gedachten Linie 20 auf.

Eine Aufsummierung der Laserpulse 3 über alle n Bearbeitungszyklen Z zeigt einen Energieeintrag in der Zeitspanne zwischen dem ersten Zeitpunkt t₁ und dem zweiten Zeitpunkt t₂ jeweils bezogen auf den Beginn der Bearbeitungszyklen Z.

Das Verhältnis der vergleichsweise langen Pulslänge w₂ zu der vergleichsweise kurzen Pulslänge w₁ bestimmt hier das Verhältnis der Schlitzlänge l zur ersten Länge l₄ des ersten Segmentes 4. Die kurze Pulslänge w₁ wurde in Abstimmung mit der Vorschubgeschwindigkeit und den Transmissionseigenschaften des an die Ansichtsseite 11 des Abdeckelementes 1 angrenzenden Materials so gewählt, dass bei der Detektion transmittierender Energieanteile eine angestrebte minimale erste Restwandsegmentstärke r₄ erreicht ist.

In Fig. 1f und 1g ist eine entstehende Schwächungslinie 2 beispielhaft in einem Abdeckelement 1, bestehend aus nur einer Schicht, dargestellt.

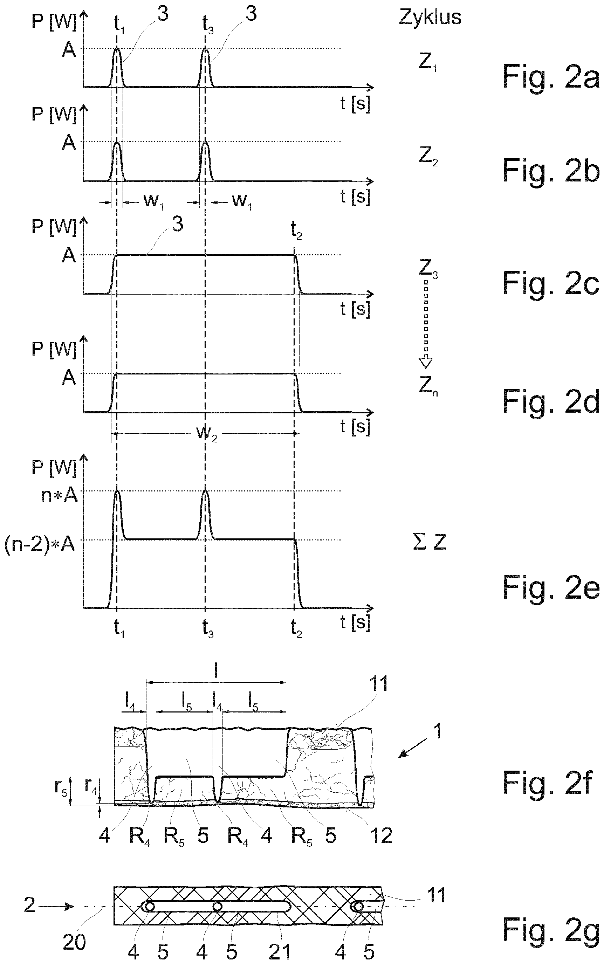

Ein zweites Ausführungsbeispiel ist in Analogie zum ersten Ausführungsbeispiel in den Fig. 2a - 2g gezeigt. Es unterscheidet sich zum ersten Ausführungsbeispiel dadurch, dass anstelle nur eines Laserpulses 3 mit einer vergleichsweise kurzen Pulslänge w₁ zwei solcher Laserpulse 3 in den ersten beiden Bearbeitungszyklen Z pro Schlitz 21 zur Wirkung kommen. Die Vorteile hierfür wurden bereits genannt.

In Fig. 2f und 2g ist eine entstehende Schwächungslinie 2 beispielhaft in einem Abdeckelement 1, bestehend aus drei Schichten, dargestellt. Die erste Restwandsegmentstärke r₄ wird hier beispielhaft detektiert zu einem Zeitpunkt, an dem die zweite Restwandsegmentstärke r₅ noch größer als die Dicke der an die Ansichtsseite 11 angrenzenden Schicht ist.

Beide vorgenannten Ausführungsbeispiele können variiert werden, insbesondere dass nur ein oder mehr als zwei Bearbeitungszyklen Z mit den Laserpulsen 3 vergleichsweise kurzer Pulslänge w₁ durchgeführt werden.

Auch könnte die Leistung P der Laserpulse 3, die über die Pulsamplitude A dargestellt ist und die hier für die Laserpulse 3 über eine Bearbeitungszeit t als konstant angenommen wurde, für die einzelnen Bearbeitungszyklen Z unterschiedlich sein.

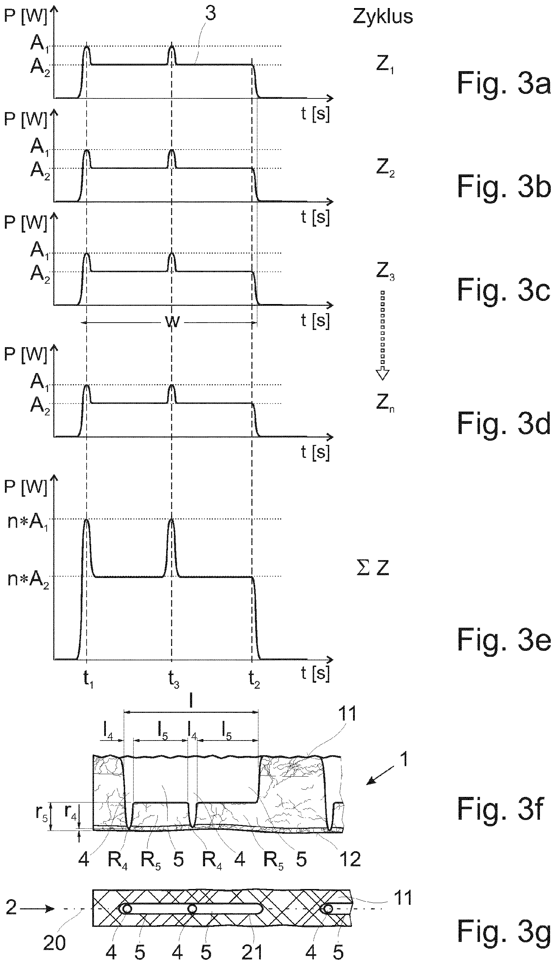

Nach einem dritten Ausführungsbeispiel, in Analogie zu den vorangestellten Ausführungsbeispielen in den Fig. 3a - 3g gezeigt, erfolgt die Bearbeitung eines Schlitzes 21 in allen Bearbeitungszyklen Z jeweils mit nur einem gleichen Laserpuls 3, der über seine Pulslänge w amplitudenmoduliert ist. Dies schafft einen zeitlichen Vorteil, da in Echtzeit ohne Zeitverlust der Materialabtrag erfolgen kann. Der Laserpuls 3 beginnt in jedem Bearbeitungszyklus Z zu einem gleichen, auf den Beginn des jeweiligen Bearbeitungszyklus Z bezogen gleichen ersten Zeitpunkt t₁. Anstelle wie hier dargestellt kann der Laserpuls 3 auch nur eine oder auch mehr als zwei Amplitudenspitzen aufweisen. Die Pulspause zwischen zwei aufeinander folgenden Laserpulsen 3 kann hier für die Umkehr der Vorschubbewegung des gepulsten Laserstahls 7 verwendet werden, was zu einer hohen Energieeffizienz eines verwendeten Lasers 6 führt.

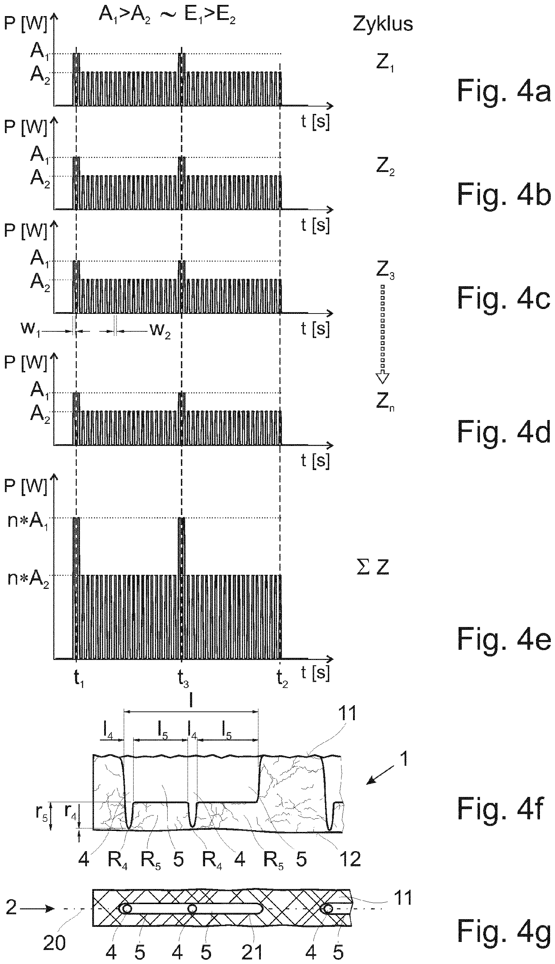

Nach einem vierten Ausführungsbeispiel, in Analogie zu den vorangestellten Ausführungsbeispielen in den Fig. 4a - 4g gezeigt, erfolgt die Bearbeitung eines Schlitzes 21 in allen Bearbeitungszyklen Z jeweils mit einer gleichen Folge von Laserpulsen 3, die eine gleiche Pulslänge w aufweisen. Zwei mal zwei benachbarte Laserpulse 3 weisen eine große Pulsamplitude A₁ im Vergleich zu den anderen Laserpulsen 3 mit einer kleinen Pulsamplitude A₂ auf. Die Folge von Laserpulsen 3 beginnt in jedem Bearbeitungszyklus Z zu einem auf den Beginn des jeweiligen Bearbeitungszyklus Z bezogen gleichen ersten Zeitpunkt t₁.

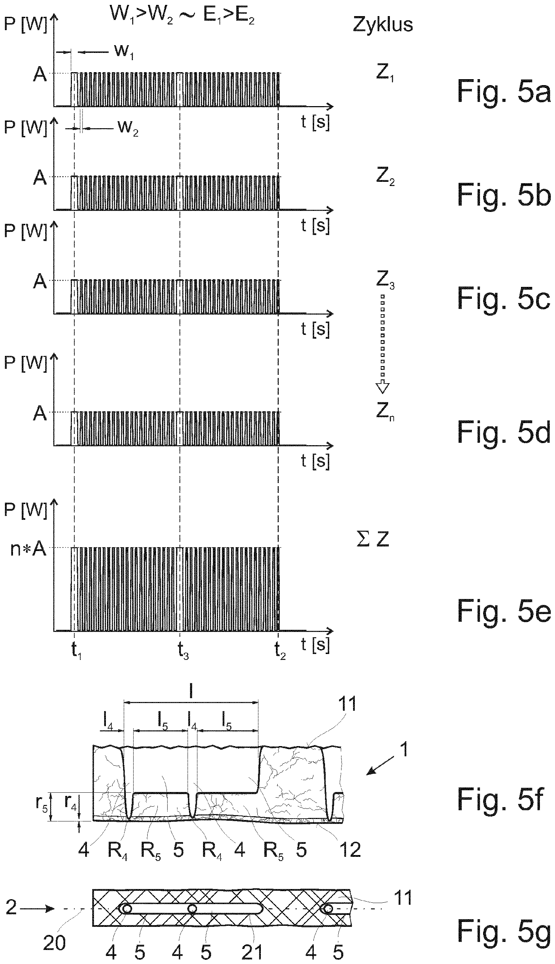

Die Pulslänge w ist mit der Vorschubgeschwindigkeit und der Pulswiederholfrequenz bevorzugt so aufeinander abgestimmt, dass keine Einzelperforationen entstehen, sondern sich ein Schlitz 21 ausbildet. Ein fünftes Ausführungsbeispiel, in Analogie zu den vorangestellten Ausführungsbeispielen in den Fig. 5a - 5g gezeigt, unterscheidet sich von dem vierten Ausführungsbeispiel dadurch, dass zwei mal zwei benachbarte Laserpulse 3 eine lange Pulslänge w₂ aufweisen im Vergleich zu den anderen Laserpulsen 3 mit einer kurzen Pulslänge w₁. Der geringere Energieeintrag entlang des zweiten Segmentes 5 wird hier durch die Pausen zwischen den Laserpulsen 3 der vergleichsweise kurzen Pulslänge w₁ bewirkt, wobei diese bevorzugt so kurz sind, dass der Energieeintrag immernoch zu einem Schlitz 21 führt und nicht zu voneinander getrennten Perforationslöchern.

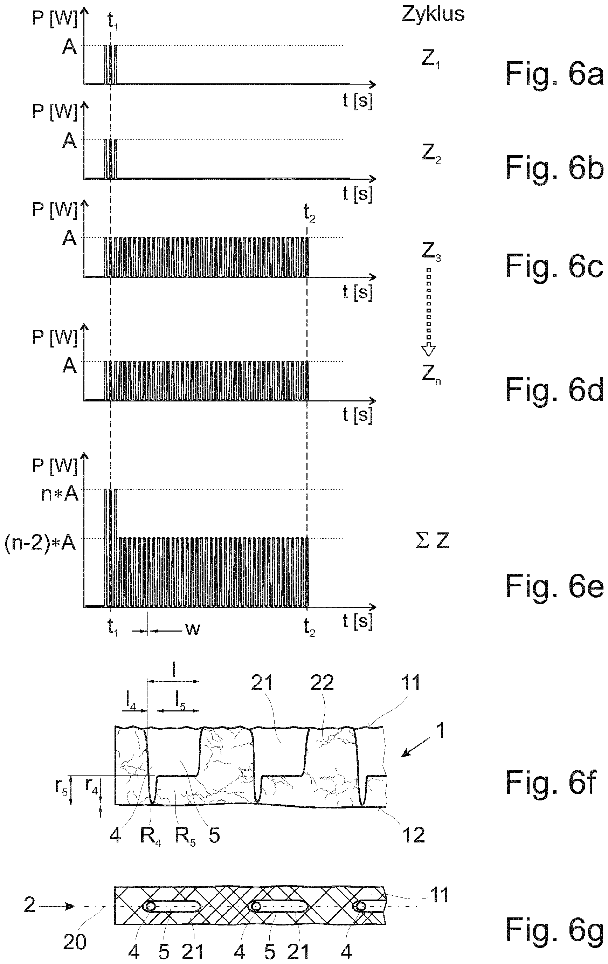

Eine sehr einfache Ausführung des Verfahrens wird anhand eines sechsten Ausführungsbeispiels erläutert, welches in Analogie zu den vorangestellten Ausführungsbeispielen in den Fig. 6a - 6g gezeigt ist.

Hier werden in den beiden ersten Bearbeitungszyklen Z gleiche kürzere Folgen von Laserpulsen 3 verwendet mit einer geringeren Anzahl von Laserpulsen 3 als sie in den nachfolgenden Bearbeitungszyklen Z in einer längeren Folge verwendet werden. Die Laserpulse 3 sind wenigstens in ihrer Pulslänge w über das gesamte Verfahren konstant und wenigstens über ihre Pulsamplituden A innerhalb eines jeden Bearbeitungszyklus Z konstant. Die Folge von Laserpulsen 3 beginnt in jedem Bearbeitungszyklus Z zu einem gleichen, auf den Beginn des jeweiligen Bearbeitungszyklus Z bezogen ersten Zeitpunkt t₁. Die längeren Folgen von Laserpulsen 3 sind so lang, dass sie bei einer vorgegebenen Vorschubgeschwindigkeit jeweils, bezogen auf den jeweiligen Bearbeitungszyklusbeginn, zu gleichen zweiten Zeitpunkten t₂ enden, an denen die Laserpulse 3 über die Schlitzlänge l geführt wurden.

Das Verfahren gemäß dem vierten, fünften und sechsten Ausführungsbeispiel kann auch so modifiziert werden, dass die Schlitze 21 durch eine Folge von eng beieinanderliegenden Perforationslöchern gebildet werden, die sich überlappen, unmittelbar aneinander grenzen oder über die Tiefe des Schlitzes 21 wenigstens teilweise durch Materialreste voneinander getrennt sind.

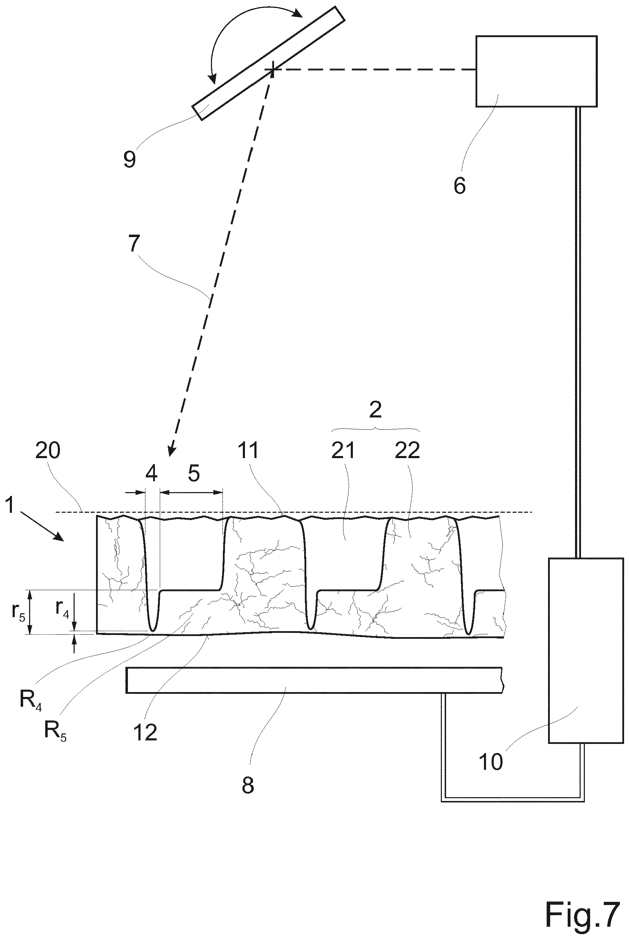

In Fig. 7 ist eine Prinzipskizze für eine Vorrichtung gezeigt, mit der das Verfahren durchgeführt werden kann. Sie weist einen Laser 6 auf, welcher einen gepulsten Laserstrahl 7 über eine Bewegungseinrichtung, hier einen Scanner 9, auf die Rückseite 12 des fest angeordneten Abdeckelements 1 richtet. Der gepulste Laserstrahl 7 wird so mehrfach entlang einer gedachten Linie 20 (nicht gezeigt in Fig. 7) geführt, entlang der die Schwächungslinie 2 hergestellt werden soll. Entlang der gedachten Linie 20 ist unterhalb des Abdeckelementes 1 eine Sensoranordnung 8 positioniert. Die Sensoranordnung 8 ist ebenso wie der Laser 6 mit einer Steuer- und Recheneinheit 10 verbunden.

### Bezugszeichenliste

- 1: Abdeckelement
- 11: Ansichtsseite (des Abdeckelementes 1)
- 12: Rückseite (des Abdeckelementes 1)

- 2: Schwächungslinie
- 20: gedachte Linie
- 21: Schlitz
- 22: Steg

- 3: Laserpuls
- 4: erstes Segment (eines Schlitzes 21)
- 5: zweites Segment (eines Schlitzes 21)
- 6: Laser
- 7: Laserstrahl
- 8: Sensoranordnung
- 9: Scanner
- 10: Steuer- und Recheneinheit

- l: Schlitzlänge
- l₄: erste Länge (des ersten Segmentes 4)
- l₅: zweite Länge (des zweiten Segmentes 5)
- R₄: erstes Restwandsegment (entlang des ersten Segmentes 4)
- R₅: zweites Restwandsegment (entlang des zweiten Segmentes 5)
- r₄: erste Restwandsegmentstärke (des ersten Restwandsegmentes R4)
- r₅: zweite Restwandsegmentstärke (des zweiten Restwandsegmentes R5)
- P: Leistung
- A: Pulsamplitude
- A₁: (vergleichsweise) große Pulsamplitude
- A₂: (vergleichsweise) kleine Pulsamplitude
- w: Pulslänge
- w₁: kurze Pulslänge
- w₂: lange Pulslänge
- Z: Bearbeitungszyklus
- Z₁: erster Bearbeitungszyklus
- Z₂: zweiter Bearbeitungszyklus
- Z₃: dritter Bearbeitungszyklus
- Zₙ: n-ter Bearbeitungszyklus
- t: Bearbeitungszeit (über einen Bearbeitungszyklus Z)
- t₁: erster Zeitpunkt
- t₂: zweiter Zeitpunkt

## Patentansprüche

1. Verfahren zur Herstellung einer Schwächungslinie (2) durch Materialabtrag an einem Abdeckelement (1), aufweisend eine Ansichtsseite (11) und eine der Ansichtsseite (11) gegenüberliegende Rückseite (12), bei dem Laserpulse (3) mit einer durch eine Pulsamplitude und eine Pulslänge bestimmten Energie auf die Rückseite (12) gerichtet werden und mit einer Vorschubgeschwindigkeit, mehrfach wiederholt jeweils in einem Bearbeitungszyklus (Z), entlang einer gedachten Linie (20) die Energie in das Abdeckelement (1) eintragen, womit die Schwächungslinie (2) infolge des Materialabtrags durch wenigstens einen Schlitz (21) mit einer Schlitzlänge (l) gebildet wird und eine Restwandstärke einer unterhalb des wenigstens einen Schlitzes (21) an die Ansichtsseite (11) angrenzenden Restwand, die sich mit jedem Bearbeitungszyklus (Z) verringert, so gering wird, dass Energieanteile der Energie der Laserpulse (3), welche durch die Restwand transmittieren, von einer Sensoranordnung (8) detektiert werden, womit die Restwandstärke erfasst wird, **dadurch gekennzeichnet, dass** entlang des wenigstens einen Schlitzes (21) punktweise entlang der gedachten Linie (20) in wenigstens einem ersten Segment (4) mit einer ersten Länge (l₄) eine höhere Energie eingetragen wird als in wenigstens einem zweiten Segment (5) mit einer zweiten Länge (l₅), sodass jeweils eine erste Restwandsegmentstärke (r₄) eines ersten Restwandsegmentes (R₄) der Restwand entlang des wenigstens einen ersten Segmentes (4) schneller abnimmt, als eine zweite Restwandsegmentstärke (r₅) eines zweiten Restwandsegmentes (R₅) der Restwand entlang des wenigstens einen zweiten Segmentes (5), wodurch jeweils die erste Restwandsegmentstärke (r₄) des ersten Restwandsegmentes (R₄) entlang des wenigstens einen ersten Segmentes (4) erfasst wird, bevor die zweite Restwandsegmentstärke (r₅) für das zweite Restwandsegment (R₅) entlang des wenigstens zweiten Segmentes (5) erfasst wird, und daraus Rückschlüsse auf die zweite Restwandsegmentstärke (r₅) des zweiten Restwandsegmentes (R₅) entlang des wenigstens einen zweiten Segmentes (5) gezogen werden, ohne sie zu erfassen.

2. Verfahren nach Anspruch 1, **dadurch gekennzeichnet, dass** der Energieeintrag pro Schlitz (21) entlang der ersten Länge (l₄) des wenigstens einen ersten Segmentes (4) wenigstens im ersten der Bearbeitungszyklen (Z) durch wenigstens einen der Laserpulse (3) erfolgt, der eine vergleichsweise kurze Pulslänge (w₁) aufweist und entlang der Schlitzlänge (l) des Schlitzes (21) in weiteren der Bearbeitungszyklen (Z) der Energieeintrag durch einen der Laserpulse (3) erfolgt, der eine vergleichsweise lange Pulslänge (w₂) aufweist.

3. Verfahren nach Anspruch 2, **dadurch gekennzeichnet, dass** die Pulsamplitude (A) der Laserpulse (3) wenigstens jeweils über einen der Bearbeitungszyklen (Z) gleich ist.

4. Verfahren nach Anspruch 1, **dadurch gekennzeichnet, dass** der Energieeintrag pro Schlitz (21) und pro Bearbeitungszyklus (Z) jeweils mit wenigstens einem gleichen der Laserpulse (3) erfolgt, der über seine Pulslänge (w) amplitudenmoduliert ist, mit einer vergleichsweise großen Pulsamplitude (A₁) für den Energieeintrag entlang der ersten Länge (l₄) des wenigstens einen ersten Segmentes (4) und einer vergleichsweise kleinen Pulsamplitude (A₂) für den Energieeintrag entlang der zweiten Länge (l₅) des wenigstens einen zweiten Segmentes (5).

5. Verfahren nach Anspruch 1, **dadurch gekennzeichnet, dass** der Energieeintrag pro Schlitz (21) und pro Bearbeitungszyklus (Z) mit einer gleichen Folge der Laserpulse (3) erfolgt, bei der wenigstens einer der Laserpulse (3) eine vergleichsweise große Pulsamplitude (A₁) für den Energieeintrag entlang der ersten Länge (l₄) des wenigstens einen ersten Segmentes (4) aufweist und mehrere der Laserpulse (3) unmittelbar aufeinanderfolgen und eine vergleichsweise kleine Pulsamplitude (A₂) für den Energieeintrag entlang der zweiten Länge (l₅) des wenigstens einen zweiten Segmentes (5) aufweisen.

6. Verfahren nach Anspruch 1, **dadurch gekennzeichnet, dass** der Energieeintrag pro Schlitz (21) und pro Bearbeitungszyklus (Z) mit einer gleichen Folge der Laserpulse (3) erfolgt, bei der wenigstens einer der Laserpulse (3) eine vergleichsweise lange Pulslänge (w₂) für den Energieeintrag entlang der ersten Länge (l₄) des wenigstens einen ersten Segmentes (4) aufweist und mehrere der Laserpulse (3) unmittelbar aufeinanderfolgend eine vergleichsweise kleine Pulsamplitude (A₂) für den Energieeintrag entlang der zweiten Länge (l₅) des wenigstens einen zweiten Segmentes (5) aufweisen und die Pulsamplitude (A) der Laserpulse (3) mit der vergleichsweise langen Pulslänge (w₂) nicht größer als die Pulsamplitude (A) der Laserpulse (3) mit der vergleichsweise kurzen Pulslänge (w₁) ist.

7. Verfahren nach Anspruch 1, **dadurch gekennzeichnet, dass** der Energieeintrag pro Schlitz (21) entlang der ersten Länge (l₄) des wenigstens einen ersten Segmentes (4) wenigstens im ersten der Bearbeitungszyklen (Z) durch wenigstens einen der Laserpulse (3) erfolgt und entlang der Schlitzlänge (l) des Schlitzes (21) in weiteren der Bearbeitungszyklen (Z) der Energieeintrag jeweils mit einer gleichen Folge der Laserpulse (3) erfolgt, wobei die Folge der Laserpulse (3) eine größere Anzahl von Laserpulsen (3) umfasst als Laserpulse (3) beim Energieeintrag pro Schlitz (21) im wenigstens ersten der Bearbeitungszyklen (Z) beteiligt sind und die Pulslänge (w) und die Pulsamplitude (A) aller Laserpulse (3) wenigstens über einen der Bearbeitungszyklen (Z) konstant ist.

8. Verfahren nach Anspruch 1, **dadurch gekennzeichnet, dass** im Anschluss an die Bearbeitungszyklen (Z) eine weitere Bearbeitung der zweiten Segmente (5) erfolgt.

## Claims

1. A method of producing a tear line (2), by material removal, in a cover element (1) comprising a visible side (11) and a reverse side (12) opposite the visible side (11), wherein laser pulses (3) are directed onto the reverse side (12) with an energy determined by a pulse amplitude and a pulse length and introduce said energy into the cover element (1) along an imaginary line (20) at a certain feed rate, with several repetitions in one processing cycle (Z), whereby the tear line (2) is formed as a result of the material removal by at least one slot (21) with a slot length (l) and a residual wall thickness of a residual wall bordering the visible side (11) below the at least least one slot (21), which decreases with each processing cycle (Z), becomes so small that energy proportions of the energy of the laser pulses (3) transmitted through the residual wall are detected by a sensor assembly (8), thereby capturing the residual wall thickness, **characterised in that** along said at least one slot (21) a higher energy is point by point along the imaginary line (20) in at least one first segment (4) of a first length (l₄) than in at least one second segment (5) of a second length (l₅), so that in each case a first residual wall strength (r₄) of a first residual wall segment (R₄) of the residual wall decreases faster along said at least one first segment (4) than a second residual wall thickness (r₅) of a second residual wall segment (R₅) of the residual wall along said at least one second segment (5), whereby the frist residual wall thickness (r₄) of the first resdiual wall segment (R₄) along said at least one first segment (4) is captured before the second residual wall thickness (r₅) of the second residual wall segment (R₅) along said at least one second segment (5) is captured and conclusions are drawn as to the second residual wall segment thickness (r₅) of the second residual wall segment (R₅) along said at least one second segment (5) without capturing it.

2. The method according to claim 1, **characterised in that** the energy input per slot (21) along the first length (l₄) of the at least one first segment (4) is effected at least in the first of the processing cycles (Z) by at least one of the laser pulses (3) having a comparatively short pulse length (w₁), and along the slot length (l) of the slot (21) in further ones of the processing cycles (Z) the energy input is effected by one of the laser pulses (3) having a comparatively long pulse length (w₂).

3. The method according to claim 2, **characterised in that** the pulse amplitude (A) of the laser pulses (3) is the same at least over one of the processing cycles (Z).

4. The method according to claim 1, **characterised in that** the energy input per slot (21) and per processing cycle (Z) is effected, in each case, by at least one same of the laser pulses (3) having amplitude modulation over its pulse length (w), with a comparatively large pulse amplitude (A₁) for the energy input along the first length (l₄) of the at least one first segment (4) and a comparatively small pulse amplitude (A₂) for the energy input along the second length (l₅) of the at least one second segment (5).

5. The method according to claim 1, **characterised in that** the energy input per slot (21) and per processing cycle (Z) is effected by the same sequence of laser pulses (3), wherein at least one of the laser pulses (3) has a comparatively large pulse amplitude (A₁) for the energy input along the first length (l₄) of the at least one first segment (4) and several of the laser laser pulses (3) succeed each other immediately and have a comparatively small pulse amplitude (A₂) for the energy input along the second length (l₅) of the at least one second segment (5).

6. The method according to claim 1, **characterised in that** the energy input per slot (21) and per processing cycle (Z) is effected by the same sequence of laser pulses (3), wherein at least one of the laser pulses (3) has a comparatively long pulse length (w₂) for the energy input along the first length (l₄) of the at least one first segment (4) and several of the laser laser pulses (3) in immediate succession have a comparatively small pulse amplitude (A₂) for the energy input along the second length (l₅) of the at least one second segment (5) and the pulse amplitude (A) of the laser pulses (3) of the comparatively long pulse length (w₂) is not greater than the pulse amplitude (A) of the laser pulses (3) of the comparatively short pulse length (w₁).

7. The method according to claim 1, **characterised in that** the energy input per slot (21) along the first length (l₄) of the at least one first segment (4) is effected at least in the first of the processing cycles (Z) by at least one of the laser pulses (3), and along the slot length (l) of the slot (21) in further ones of the processing cycles (Z), the energy input is effected by the same sequence of laser pulses (3) each time, wherein the sequence of the laser pulses (3) comprises a greater number of laser pulses (3) than there are laser pulses (3) involved in the energy input per slot (21) in the at least first one of the processing cycles (Z), and the pulse length (w) and the pulse amplitude (A) of all laser pulses (3) are constant over at least one of the processing cycles (Z).

8. The method according to claim 1, **characterised in that** further processing of the second segments (5) follows after the processing cycles (Z).

## Revendications

1. Procédé de fabrication d'une ligne de faiblesse (2) par enlèvement de matière sur un élément de couverture (1), présentant une face visible (11) et une face arrière (12) à l'opposite de la face visible (11), dans lequel procédé des impulsions laser (3) d'une énergie déterminée par une amplitude d'impulsion et une longueur d'impulsion sont dirigées sur la face arrière (12) et apportent ladite énergie dans l'élément de couverture (1) à une vitesse d'avance, à plusieurs répétitions dans un seul cycle d'usinage (Z) à chaque fois, selon une ligne imaginaire (20), de sorte que ladite ligne de faiblesse (2) soit créée à cause de l'enlèvement de matière sous forme d'au moins une fente (21) d'une longueur de fente (l) et qu'une épaisseur de paroi résiduelle d'une paroi résiduelle avoisinant la face visible (11) au-dessous de ladite au moins une fente (21), qui diminue par chaque cycle d'usinage, devienne si petite que des proportions de l'énergie des impulsions laser (3) transmises à travers la paroi résiduelle soient détectées par un ensemble de capteurs (8), saisissant ainsi l'épaisseur de paroi résiduelle, ledit procédé étant **caractérisé en ce que**
le long de ladite au moins une fente (21), on apporte point par point, selon la ligne imaginaire (20) dans au moins un premier segment (4) d'une première longueur (l₄), une énergie supérieure à celle introduite dans au moins un deuxième segment (5) d'une deuxième longueur (l₅), de sorte qu'une première épaisseur de segment de paroi résiduelle (r₄) d'un premier segment de paroi résiduelle (R₄) de la paroi résiduelle le long dudit au moins un premier segment (4) diminue plus vite à chaque fois qu'une deuxième épaisseur de segment de paroi résiduelle (r₅) d'un deuxième segment de paroi résiduelle (R₅) de la paroi résiduelle le long d'au moins un deuxième segment (5), saisissant ainsi à chaque fois la première épaisseur de segment de paroi résiduelle (r₄) du premier segment de paroi résiduelle (R₄) le long dudit au moins un premier segment (4) avant de saisir la deuxième épaisseur de segment de paroi résiduelle (r₅) pour le deuxième segment de paroi résiduelle (R₅) le long dudit au moins un deuxième segment (5), et en tirant des conclusions quant à la deuxième épaisseur de segment de paroi résiduelle (r₅) du deuxième segment de paroi résiduelle (R₅) le long dudit au moins un deuxième segment (5), sans saisir celle-ci.

2. Procédé selon la revendication 1, **caractérisé en ce que** l'apport d'énergie par fente (21) selon la première longueur (l₄) dudit au moins un premier segment (4) est effectué, au moins dans le premier des cycles d'usinage (Z), par au moins une des impulsions laser (3), qui présente une longueur d'impulsion (w₁) relativement courte, et **en ce que** l'apport d'énergie est effectué le long de la longueur de fente (l) de la fente (21) dans d'autres cycles d'usinage (Z) par une des impulsions laser (3) qui présente une longueur d'impulsion (w₂) relativement longue.

3. Procédé selon la revendication 2, **caractérisé en ce que** l'amplitude d'impulsion (A) des impulsions laser (3) est égale au moins pendant l'un des cycles d'usinage (Z).

4. Procédé selon la revendication 1, **caractérisé en ce que** l'apport d'énergie par fente (21) et par cycle d'usinage (Z) est respectivement effectué par une même des impulsions laser (3), qui est modulée en amplitude sur sa longueur d'impulsion (w), avec une amplitude d'impulsion (A₁) relativement grande pour l'apport d'énergie selon la première longueur (l₄) dudit au moins un premier segment (4) et avec une amplitude d'impulsion (A₂) relativement petite pour l'apport d'énergie selon la deuxième longueur (l₅) dudit au moins un deuxième segment (5).

5. Procédé selon la revendication 1, **caractérisé en ce que** l'apport d'énergie par fente (21) et par cycle d'usinage (Z) est effectué par une même séquence des impulsions laser (3), dans laquelle au moins une des impulsions laser (3) présente une amplitude d'impulsion (A₁) relativement grande pour l'apport d'énergie selon la première longueur (l₄) dudit au moins un premier segment (4) et plusieurs des impulsions laser (3) se succèdent directement et présentent une amplitude d'impulsion (A₂) relativement petite pour l'apport d'énergie selon la deuxième longueur (l₅) dudit au moins un deuxième segment (5).

6. Procédé selon la revendication 1, **caractérisé en ce que** l'apport d'énergie par fente (21) et par cycle d'usinage (Z) est effectué par une même séquence des impulsions laser (3), dans laquelle au moins une des impulsions laser (3) présente une longueur d'impulsion (w₂) relativement longue pour l'apport d'énergie selon la première longueur (l₄) dudit au moins un premier segment (4) et plusieurs des impulsions laser (3) en succession directe présentent une amplitude d'impulsion (A₂) relativement petite pour l'apport d'énergie selon la deuxième longueur (l₅) dudit au moins un deuxième segment (5) et **en ce que** l'amplitude d'impulsion (A) des impulsions laser (3) de longueur d'impulsion (w₂) relativement longue n'est pas supérieure à l'amplitude d'impulsion (A) des impulsions laser (3) de longueur d'impulsion (w₁) relativement courte.

7. Procédé selon la revendication 1, **caractérisé en ce que** l'apport d'énergie par fente (21) selon la première longueur (l₄) dudit au moins un premier segment (4) est effectué, au moins dans le premier des cycles d'usinage (Z), par au moins une des impulsions laser (3), et **en ce que** l'apport d'énergie est effectué le long de la longueur de fente (l) de la fente (21) dans d'autres cycles d'usinage (Z) par une même séquence respective d'impulsions laser (3), ladite séquence d'impulsions laser (3) comportant un nombre d'impulsions laser (3) supérieur à celui des impulsions laser (3) utilisées pour l'apport d'énergie par fente (21) dans l'au moins premier des cycles d'usinage (Z) et la longueur d'impulsion (w) et l'amplitude d'impulsion (A) de toutes les impulsions laser (3) sont constantes pendant au moins l'un des cycles d'usinage (Z).

8. Procédé selon la revendication 1, **caractérisé en ce qu'**un usinage additionnel des deuxièmes segments (5) est réalisé à la suite des cycles d'usinage (Z).
